Europäisches Patentamt

European Patent Office

Office européen des brevets

(19)

(11) Veröffentlichungsnummer: **0 082 468**
**B1**

(12) EUROPÄISCHE PATENTSCHRIFT

(45) Veröffentlichungstag der Patentschrift:
10.04.85

(51) Int. Cl.⁴: **B 21 D 53/74**, E 06 B 3/26

(21) Anmeldenummer: 82111615.9

(22) Anmeldetag: 14.12.82

(54) Verfahren, Vorrichtung und Isolierstab zur Herstellung eines wärmegedämmten Verbundprofiles für Fenster, Türen oder dgl.

(30) Priorität: 21.12.81 DE 3150578

(43) Veröffentlichungstag der Anmeldung:
29.06.83 Patentblatt 83/26

(45) Bekanntmachung des Hinweises auf die Patenterteilung:
10.04.85 Patentblatt 85/15

(84) Benannte Vertragsstaaten:
AT BE CH DE FR LI NL

(56) Entgegenhaltungen:
DE - A - 2 559 599
DE - A - 2 717 352
DE - A - 2 825 301
DE - B - 2 755 669

(73) Patentinhaber: Keller, Eberhard, Bergstrasse 25,
D-7121 Freudental (DE)

(72) Erfinder: Keller, Eberhard, Bergstrasse 25,
D-7121 Freudental (DE)

(74) Vertreter: Ernicke, Hans-Dieter, Dipl.-Ing.,
Schwibbogenplatz 2b, D-8900 Augsburg (DE)

## Beschreibung

Die Erfindung bezieht sich auf Verfahren zur Herstellung eines wärmegedämmten Verbundprofils für Fenster, Türen od. dgl. sowie auf Vorrichtungen zur Durchführung dieses Verfahrens.

Dabei geht die Erfindung von der Lehre der DE-AS Nr. 2755669 aus, wonach es bekannt ist, zwei in Distanz zueinander angeordnete Metallprofile über zwei ebenfalls voneinander distanzierte, in hinterschnittene Nuten der Metallprofile eingreifende Isolierstäbe miteinander zu verbinden, wobei die die Nuten nach der einen Seite begrenzenden Nutleisten gegen die gegenüberliegenden, stabiler ausgebildeten Nutleisten durch mechanische Einwirkung unter Einspannung hammerkopfartiger Ränder der Isolierstäbe verformt werden.

Bei diesem Verfahren wird die Verformung der Nutleisten zweistufig durchgeführt. Der Anlass für diese Idee war der Wunsch, ein durch den Hohlraum zwischen Isolierstäben und Metallprofilen hindurchzuführendes Verformungswerkzeug zu vermeiden. Nach diesem Verfahren müssen die beiden Metallprofile in einem bestimmten Abstand zueinander festgespannt werden, woraufhin zunächst ein Profilstab von der Stirnseite her in die ihm zugeordnete Nuten mit Spiel eingeführt wird. Daraufhin werden die innenliegenden Nutleisten mit Hilfe eines Verformungswerkzeuges gegen den Isolierstab verformt, was deswegen möglich ist, weil die Verformungswerkzeuge noch durch den freien Raum hindurchtreten können, der später vom zweiten Isolierstab abgeschlossen wird. Es muss daraufhin der zweite Isolierstab in die ihm zugeordneten Nuten von der Stirnseite her eingezogen werden, woraufhin die aussenliegenden Nutstege gegen diesen Isolierstab verformt werden. Diese Massnahme setzt voraus, dass die zugeordneten innenliegenden Nutleisten so steif ausgebildet sind, dass sie in der Lage sind, die Verformungsreaktionskraft aufzunehmen.

Ein solches Verfahren ist zeitlich sowie werkzeugtechnisch besonders aufwendig und weist im besonderen keine Massnahmen auf, welche die Toleranzgenauigkeit der herzustellenden Verbundprofile verbessern könnten.

Bei der DE-OS Nr. 2717352 wird ein Werkzeug mit Hilfe eines Seilzuges durch den von den Metallprofilen und den Isolierstäben gebildeten Hohlraum hindurchgezogen, wobei keilförmig gestaffelt gelagerte Verformungsrollen gegen die innenliegenden Nutleisten einwirken und sich auch daran abstützen. Es erfolgt eine stufenweise Verformung der innenliegenden Nutleisten, deren Maximum vom grössten Abstand der einander gegenüberliegenden Verformungsrollen abhängig ist. Wenn aber aufgrund von Toleranzunterschieden od. dgl. der Widerstand der zu verformenden Nutleisten ungleich gross ist, kann es vorkommen, dass das durch das Verbundprofil hindurchgeführte Verformungswerkzeug gewisse geringfügige seitliche Ausweichbewegungen während des Vorschubes in Abhängigkeit von der Grösse der Widerstände ausführt.

Der Erfindung liegt die Aufgabe zugrunde, einen neuen Weg aufzuzeigen, wie man Verbundprofile der eingangs erwähnten Art schneller, toleranzgenauer und ohne wesentlichen werkzeugtechnischen Mehraufwand herstellen kann.

Ausgehend von der DE-AS Nr. 2755669 besteht das erfindungsgemässe Verfahren darin, dass beide verformungsfähigen Nutleisten in einem einstufigen Arbeitsgang verformt werden, indem ein gegen die aussenliegenden Nutleisten einwirkendes Verformungswerkzeug mit einem durch den von den Isolierstäben und den Metallprofilen gebildeten Hohlraum geführtes Verformungswerkzeug relativ entlang des Verbundprofiles geführt werden, wobei das durch den Hohlraum geführte Verformungswerkzeug sich entweder an den innenliegenden, nicht zu verformenden Nutleisten oder an dem von ihnen gehaltenen Isolierstab abstützt und verformend auf die anderen innenliegenden Nutleisten einwirkt. Zweckmässigerweise wird die Verformung der Nutleisten zeitgleich und synchron vorgenommen. Während bei der DE-OS Nr. 2717352 alle vier innenliegenden Nutleisten verformt werden, werden bei der Erfindung nur zwei der vier innenliegenden Nutleisten verformungstechnisch beansprucht. Dies bringt den Vorteil mit sich, dass das durch den Hohlraum geführte Verformungswerkzeug sich an konkreten Flächen abstützen muss und damit eine Toleranzgenauigkeit der Verformung in einem vorgegebenen Abstand von dieser Fläche in besonderer Weise herbeiführt. Infolgedessen hat die Verformung der aussenliegenden Nutleisten durch das von aussen einwirkende Verformungswerkzeug keinerlei Einfluss auf die innenliegenden, zu verformenden Nutleisten.

Der besondere Vorteil dieser Massnahme liegt darin, dass die Isolierstäbe, wie bisher üblich, mit Spiel in die ihnen zugeordneten Nuten von der Stirnseite her eingeführt werden können, dass aber dann das Spiel durch seitliches Verspannen der Metallprofile gegeneinander aufgehoben werden kann, weil die Vorschubbewegung des innen- und aussenliegenden Verformungswerkzeuges unabhängig von irgendwelchen Zwängungen vorgenommen werden kann. Als Ergebnis entsteht somit ein wärmegedämmtes Verbundprofil von hoher Stabilität, günstiger Wärmedämmung und vor allem grösster Genauigkeit.

In einer Variante des erfindungsgemässen Verfahrens ist vorgesehen, dass das durch den Hohlraum geführte Verformungswerkzeug mittels Rollen am mittleren Bereich der Isolierleiste abgestützt wird, gegen welchen Bereich entsprechende Stützrollen des gegen die aussenliegenden Nutleisten einwirkenden Verformungswerkzeuges angedrückt werden.

Mit dieser Lehre der Erfindung wird ein scheinbares Risiko bewusst eingegangen, indem die Abstützung des Verformungswerkzeuges nicht am Metall, sondern am Kunststoff vorgenommen wird. An sich würde zu erwarten sein, dass ein Kunststoffsteg keine ausreichende Stützkraft vermittelt. Diese Stützkraft wird nach der Erfindung dadurch erzeugt, dass der von innen angreifenden Stützrolle eine von aussen angestellte Stützrolle entgegenwirkt, deren Stützkräfte einander aufheben. Die erfindungsgemässe Massnahme hat den Vorteil, dass die Abstützung an einer konstruktiv vorgegebenen Fläche erfolgt und damit die Verformung der dieser Fläche gegenüberliegenden Nutleisten toleranzgenauer herbeigeführt werden kann. Ausserdem hat das Abwälzen der Stützrollen an den mittleren Bereichen der Isolierstäbe die Folge, dass deren Material verdichtet und somit die Isolierstäbe versteift werden.

Eine geeignete Vorrichtung zur Durchführung des Verfahrens ergibt sich aus den Unteransprüchen 4 bis 6.

Einzelheiten der Erfindung ergeben sich aus der Zeichnung. Darin ist die Erfindung schematisch und beispielsweise dargestellt. Es zeigen:

Fig. 1 einen Querschnitt durch ein Verbundprofil mit schematisch angedeuteten Verformungswerkzeugen,

Fig. 2 einen Querschnitt gemäss Fig. 1 mit einer Ausführungsvariante eines Werkzeuges,

Fig. 3 eine Stirnansicht, teils im Querschnitt, eines aussenliegenden Verformungswerkzeuges, und

Fig. 4 einen Teilquerschnitt durch eine Verformungsrolle des Werkzeuges gemäss Fig. 3.

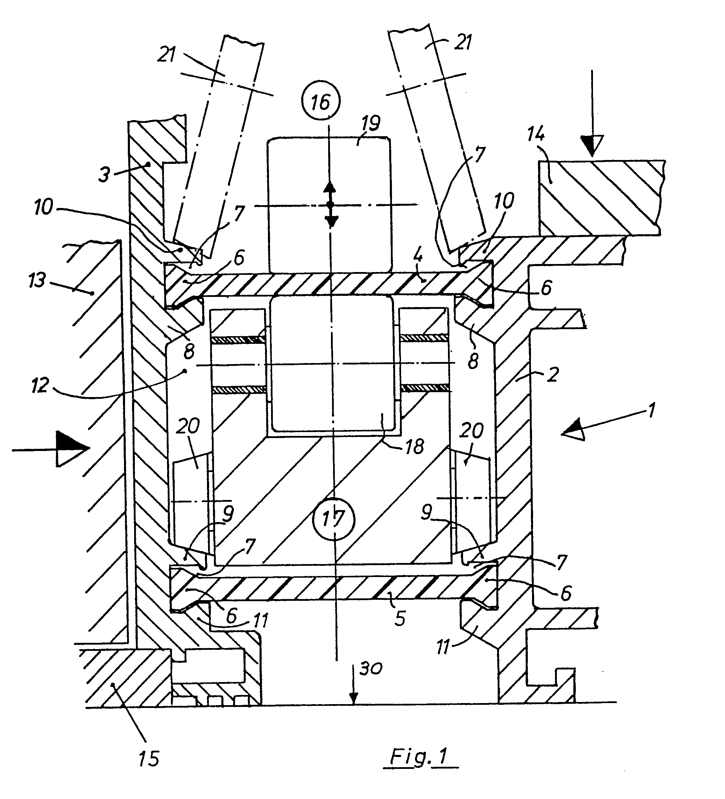

Im Ausführungsbeispiel der Fig. 1 sind zwei zueinander distanziert angeordnete und nur teilweise im Querschnitt dargestellte Metallprofile 2, 3 gezeigt, die in üblicher Weise aus stranggepresstem Leichtmetall bestehen. In hammerkopfartige Nuten 7 dieser Metallprofile 2, 3 werden von der Stirnseite her Isolierstäbe 4, 5 aus Kunststoff eingesetzt, deren hammerkopfartige Ränder 6 ungefähr der Querschnittsform der Nuten 7 entspricht, wobei das Einsetzen der Isolierstäbe 4, 5 unter Wahrung eines gewissen Spieles von der Stirnseite der Metallprofile 2, 3 her erfolgt. Diese Metallprofile 2, 3 und Isolierstäbe 4, 5 sollen miteinander fest verbunden werden und ein Verbundprofil 1 bilden, welches später zu einem Rahmen für Fenster, Türen od. dgl. verarbeitet wird.

Die feste Verbindung der Isolierstäbe 4, 5 mit den Metallprofilen 2, 3 wird dadurch herbeigeführt, dass die die hammerkopfartigen Ränder 6 begrenzenden Nutleisten 8 bis 11 der Metallprofile 2, 3 so ausgebildet bzw. verformt werden, dass die hammerkopfartigen Ränder der Isolierstäbe 4, 5 fest eingespannt werden.

Es wird hierbei davon ausgegangen, dass beide Metallprofile 2, 3 auf einer gemeinsamen Spannfläche 30 aufsitzen. Das Metallprofil 2 ist ortsfest mit dem Spannmittel 14 festgelegt. Das Metallprofil 3 ist zunächst am Zentriermittel 15 geführt. Sobald die Isolierstäbe 4, 5 in die Nuten 7 eingeführt sind, wird das Spannmittel 13 gegen das Metallprofil 3 gepresst, wodurch die Isolierstäbe 4, 5 auf Knickung belastet werden und das zwischen ihnen und den Metallprofilen 2, 3 befindliche Spiel beseitigt wird.

Der untere Isolierstab 5 liegt auf den aussenliegenden Nutleisten 11 auf, die so steif gestaltet sind, dass ein gegen sie wirkender Verformungsdruck aufgefangen werden kann. Die gegenüberliegenden, innenliegenden Nutleisten 9, die in Fig. 1 in der stranggepressten Grundstellung dargestellt sind, müssen gegen die hammerkopfartigen Ränder 6 des Isolierstabes 5 verformt werden, um diesen Isolierstab 5 starr mit den Metallprofilen 2, 3 zu verbinden.

Zu diesem Zweck wird durch den von den Metallprofilen 2, 3 und den Isolierstäben 4, 5 gebildeten Hohlraum 12 ein Verformungswerkzeug 17 hindurchgeführt, welches keilförmig gestaffelte Verformungsrollen 20 aufweist, die gegen die innenliegenden Nutleisten 9 einwirken und diese verformen.

Eine solche Technik ist aus der DE-OS Nr. 2717352 bekannt, weshalb auf deren Offenbarung hingewiesen wird.

Die Stützkraft für die Verformungsrollen 20 wird im Falle des Ausführungsbeispiels der Fig. 1 dadurch erzeugt, dass mindestens zwei, vornehmlich drei Stützrollen 18 im Abstand hintereinander am innenliegenden Verformungswerkzeug 17 gelagert sind, welche gegen die nach innen gekehrte Fläche des anderen Isolierstabes 4 einwirken. Um eine Durchbiegung dieses Isolierstabes 4 zu vermeiden, werden Stützrollen 19 eines aussenliegenden Verformungswerkzeuges 16 entgegengestellt. Beide Verformungswerkzeuge 16, 17 werden entlang des Verbundprofiles 1 synchron bewegt, wobei es von Vorteil ist, wenn die Stützrollen 18, 19 genau einander gegenüberliegen.

Der Isolierstab 4 wird innenseitig von innenliegenden Nutleisten 8 begrenzt, die so steif ausgebildet sind, dass sie Verformungsreaktionskräfte auszunehmen in der Lage sind. Mit dem symbolisch durch die Bezugsziffer 16 dargestellten, aussenliegenden Verformungswerkzeug 16 sind Verformungsrollen 21 um schräg liegende Achsen gelagert verbunden, deren Mantelfläche auf die aussenliegenden Nutleisten 10 einwirken und diese gegen die hammerkopfartigen Ränder 6 des Isolierstabes 4 verformen.

Diese zu Fig. 1 geschilderte Verfahrenstechnik ist einstufig durchführbar, wobei die beim Strangpressen der Metallprofile 2, 3 sowie die bei der Herstellung der Isolierstäbe 4, 5 unvermeidlichen Toleranzen praktisch ausgeschaltet werden. Die Verformung der innenliegenden Nutleisten 9 ist nämlich nicht mehr von der Ausbildung des innenliegenden Verformungswerkzeuges 17 abhängig, sondern erhält ihre Verformungsgenauigkeit durch die Abstützung der Stützrolle 18 am anderen Isolierstab 4. Selbst dann, wenn die innenliegenden Nutleisten 8 hinsichtlich ihrer Lage aufgrund des Strangpressens eine ungünstige Anordnung des Isolierstabes 4 ergeben, würde durch die Gegeneinanderpressung der Stützrollen 18, 19 in Verbindung mit einer gewissen Durchbiegung der Isolierleiste 4 die toleranzfreie und daher genaue Verformung der innenliegenden Nutleisten 9 gegen den Isolierstab 5 gewährleisten.

Es versteht sich von selbst, dass die Nutleisten 8 bis 11 so gestaltet und ggf. verzahnt, gerändelt oder in irgendeiner Weise profiliert sind, dass deren Verpressen gegen die Isolierstäbe 4, 5 einen besonders guten Haftverbund in Längsrichtung des Verbundprofiles 1 herbeiführen, wie dies in verschiedener Weise bekanntgeworden ist.

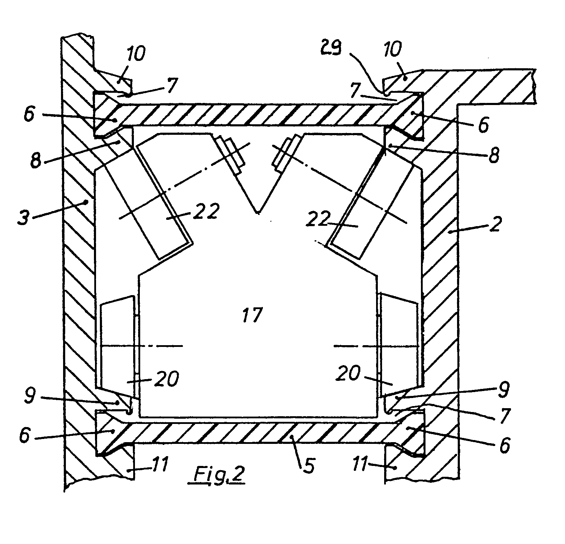

Beim Ausführungsbeispiel der Fig. 2 wird davon ausgegangen, dass die Verformungsrollen 20 des innenliegenden Verformungswerkzeuges 17 ihre Stützkraft dadurch erhalten, dass besondere Stützrollen 22 gegen die innenliegenden Nutleisten 8 angestellt sind. Diese Nutleisten 8 sind demgemäss so stabil ausgebildet, dass sie nicht federnd ausweichen, was auch deshalb unwahrscheinlich ist, weil gleichzeitig die aussenliegenden Nutleisten 10 gegen die hammerkopfartigen Ränder 6 des Isolierstabes 4 verformt werden und damit die Kräfte einander aufheben.

Falls die Toleranzunterschiede des Abstandes der Nutleisten 8, 9 so gross sein sollten, dass Zwängungen zu befürchten wären, ist die Möglichkeit gegeben, die Stützrollen 22 oder/und die Verformungsrollen 20 mit grosser Vorspannkraft federnd zu lagern, um solchen Zwängungen auszuweichen.

In Fig. 2 ist nicht dargestellt, in welcher Weise die aussenliegenden Nutleisten 10 verformt werden. Hierzu wird auf die symbolische Darstellung in Fig. 1 sowie auf den Stand der Technik gemäss DE-AS Nr. 2755669 verwiesen.

Im besonderen wird es sich als zweckmässig erweisen, parallel und in Distanz zur Spannfläche 30 einen in Fig. 4 dargestellten Ständerbalken 31 vorzusehen, an dem das aussenliegende Verformungswerkzeug 16 längs des Verbundprofiles 1 geführt ist. Dieses Verformungswerkzeug 16 wird zweckmässigerweise mehrteilig ausgebildet sein, um durch Verstellung der einzelnen Baugruppen eine Anpassung an die Raumform des herzustellenden Verbundprofiles 1 zu gestatten. Es versteht sich von selbst, dass die Stützrollen 19 und Verformungsrollen 21 gemäss Fig. 1 versetzt hintereinander angeordnet sind, wobei die Verformungsrollen 21, wie im Stand der Technik vorgesehen, zweckmässigerweise keilförmig gestaffelt gelagert sind, um von Rolle zu Rolle eine Verformung der aussenliegenden Nutleisten 10 bis zum endgültigen Verformungszustand herbeizuführen.

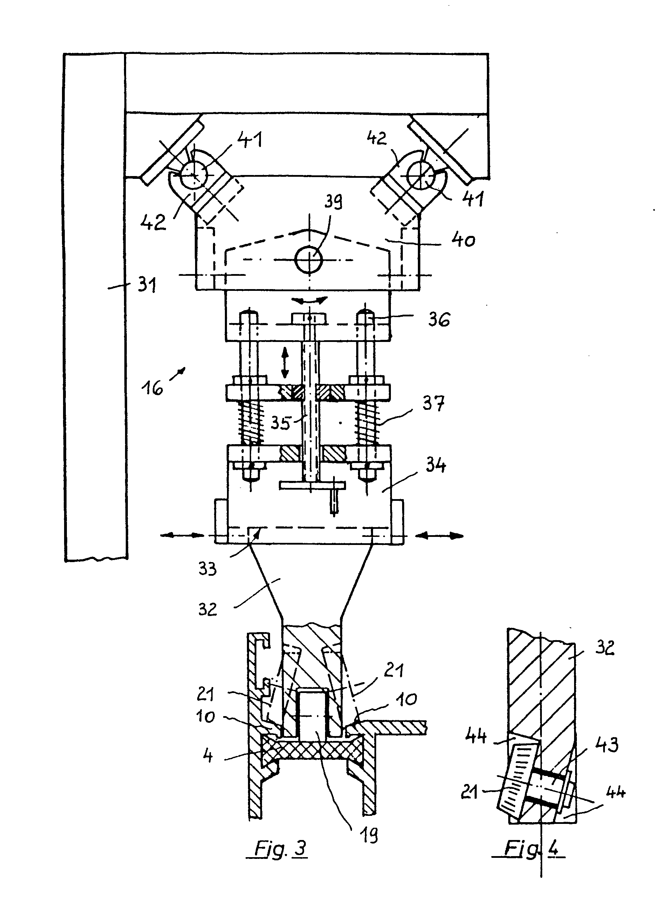

Die Fig. 3 zeigt im unteren Teil den Isolierstab 4 mit den aussenliegenden Nutleisten 10 gemäss Fig. 1, die von den Verformungsrollen 21 zu verformen sind. Diese sind an einem Werkzeugträger 32 gelagert, der entlang einer z. B. schwalbenschwanzförmigen Nut 33 an einem Halter 34 verstellbar befestigt ist. Am Werkzeugträger 32 sind auch die Stützrollen 19 gelagert.

Über eine Spindel 35 sowie federnde Führungsbolzen 36 ist der Halter 34 gegenüber einem Joch 38 höhenverstellbar, das bei 39 pendelfähig an einem Schlitten 40 gelagert ist.

Der Ständerbalken 31 weist beim Ausführungsbeispiel zwei parallele Führungen 41 auf, an denen passende Führungskörper 42 des Schlittens 40 entlang bewegbar sind.

Das Pendellager 39 erlaubt dem Schlitten 40 eine leichte Querstellung, die von unterschiedlichen Höhen der Nutleisten 10 innerhalb der Toleranzgrenzen verursacht werden können. Über die Spindel 35 wird die Einstellung des Werkzeuges auf unterschiedliche Profilhöhen vorgenommen. Die Federn 37 lassen Höhentoleranzen ausgleichen.

Der Werkzeuträger 32 kann austauschbar sein, um eine schnelle Anpassung an unterschiedliche Profile zu gestatten.

Im Beispiel der Fig. 4 ist gezeigt, dass die Verformungsrollen 21 um schräge Achsen 43 gelagert sind, wozu der Werkzeugträger 32 passende Ausfräsungen 44 aufweist. Es können hintereinander mehrere Verformungsrollen 21 unterschiedlichen Durchmessers gelagert und dazwischen die Stützrollen 19 gemäss Fig. 1 und 4 angeordnet sein.

Beide Verformungswerkzeuge 16, 17 werden synchron miteinander angetrieben, was beispielsweise über moderne elektronische Zähltechnik hinsichtlich der Vorschubwege bzw. -geschwindigkeiten gesteuert werden kann.

*Stückliste*

| | |
|---|---|
| 1 | Verbundprofil |
| 2 | Metallprofil |
| 3 | Metallprofil |
| 4 | Isolierstab |
| 5 | Isolierstab |
| 6 | hammerkopfartiger Rand |
| 7 | Nut |
| 8 | innenliegende Nutleiste (starr) |
| 9 | innenliegende Nutleiste (verformbar) |
| 10 | aussenliegende Nutleiste (verformbar) |
| 11 | aussenliegende Nutleiste (starr) |
| 12 | Hohlraum |
| 13 | Spannmittel |
| 14 | Spannmittel |
| 15 | Zentriermittel |
| 16 | aussenliegendes Verformungswerkzeug |
| 17 | innenliegendes Verformungswerkzeug |
| 18 | Stützrolle |
| 19 | Stützrolle |
| 20 | Verformungsrolle |
| 21 | Verformungsrolle |
| 22 | Stützrolle |
| 23 | |
| 24 | |
| 25 | |
| 26 | |
| 27 | |
| 28 | |
| 29 | |
| 30 | Spannfläche |
| 31 | Ständerbalken |
| 32 | Werkzeugträger |
| 33 | Nut |
| 34 | Halter |
| 35 | Spindel |
| 36 | Führungsbolzen |
| 37 | Feder |
| 38 | Joch |
| 39 | Lager |
| 40 | Schlitten |
| 41 | Führung |
| 42 | Führungskörper |
| 43 | schräge Achse |
| 44 | Ausfräsung |

**Patentansprüche**

1. Verfahren zur Herstellung eines wärmegedämmten Verbundprofils für Fenster, Türen od. dgl., bestehend aus zwei in Distanz zueinander angeordneten Metallprofilen (2, 3), die über zwei ebenfalls voneinander distanzierte, in hinterschnittene Nuten (7) der Metallprofile eingreifende Isolierstäbe (4, 5) miteinander verbunden sind, wobei die die Nuten (7) nach der einen Seite begrenzenden Nutleisten gegen die gegenüberliegenden, stabiler ausgebildeten Nutleisten durch mechanische Einwirkung unter Einspannung hammerkopfartiger Ränder (6) der Isolierstäbe (4, 5) verformt werden, dadurch gekennzeichnet, dass beide verformfähigen Nutleisten in einem einstufigen Arbeitsgang verformt werden, indem ein gegen die aussenliegenden Nutleisten einwirkendes Verformungswerkzeug mit einem durch den von den Isolierstäben (4, 5) und den Metallprofilen gebildeten Hohlraum (12) geführtes Verformungswerkzeug (17) relativ entlang des Verbundprofiles geführt werden, wobei das durch den Hohlraum (12) geführte Verformungswerkzeug (17) sich entweder an den innenliegenden, nicht zu verformenden Nutleisten oder an dem von ihnen gehaltenen Isolierstab abstützt und verformend auf die anderen innenliegenden Nutleisten einwirkt.

2. Verfahren nach Anspruch 1, dadurch gekennzeichnet, dass die Verformung der Nutleisten zeitgleich und synchron vorgenommen wird.

3. Verfahren nach einem der Ansprüche 1 oder 2, dadurch gekennzeichnet, dass das durch den Hohlraum (12) geführte Verformungswerkzeug (17) mittels Rollen (19) am mittleren Bereich des Isolierstabes (4) abgestützt wird, gegen welchen Bereich entsprechende Stützrollen (18) des gegen die aussenliegenden Nutleisten einwirkenden Verformungswerkzeuges angedrückt werden.

4. Vorrichtung zur Durchführung des Verfahrens nach Anspruch 1 oder einem der folgenden Ansprüche, bestehend aus einer die beiden Metallprofile in Distanz zueinander haltenden Spannvorrichtung und aus einem durch den von zwei Isolierstäben (4, 5) und den beiden Metallprofilen gebildeten Hohlraum (12) hindurchführbaren Verformungswerkzeug (17), dadurch gekennzeichnet, dass an einem längs der aufgespannten Metallprofile (2, 3) sich erstreckenden Ständerbalken (31) ein Verformungswerkzeug (16) beweglich geführt und synchron mit dem durch den Hohlraum (12) geführten Verformungswerkzeug (17) angetrieben ist, wobei der Werkzeugträger (16) auf beiden Längsseiten im Abstand zueinander und um schräge Achsen gelagerte Verformungsrollen (21) für die Verformung der aussenliegenden Nutleisten (10) aufweist.

5. Vorrichtung nach Anspruch 4, dadurch gekennzeichnet, dass der Werkzeugträger (16) mindestens zwei, vornehmlich drei zylinderförmige, gegen den mittleren Bereich des Isolierstabes (4) einwirkende Stützrollen (19) aufweist, und dass der durch den Hohlraum (12) geführte Werkzeugträger (17) in gleichem Abstand voneinander angeordnete, entgegenwirkende Stützrollen (18) aufweist, deren auf den Steg des Isolierstabes (4) einwirkende Stützkräfte einander aufheben.

6. Vorrichtung nach einem der Ansprüche 4 oder 5, dadurch gekennzeichnet, dass der Werkzeugträger (16) aus mehreren miteinander verstellbar verbundenen Bauteilen besteht.

**Claims**

1. Method for producing a thermally insulated composite profile for windows, doors or the like, consisting of two spaced apart metal profile sections (2, 3) connected to one another by two similar spaced apart insulating rods (4, 5) engaging in undercut grooves (7) of the metal profile sections, wherein the groove strips bordering the grooves (7) on one side are deformed against the opposite, more stable groove strips by mechanical action under the clamping effect of hammerhead-like edges (6) of the insulating rods (4, 5), characterised in that both deformable groove strips are deformed in a one-step working stabe by guiding a deforming tool acting against the outer groove strips together with a deforming tool (17) guided through the hollow space (12) formed by the insulating rods (4, 5) and the metal profile sections, in a relative manner along the composite profile section, wherein the deforming tool (17) guided through the hollow space (12) is supported either on the internal groove strips not being deformed or on the insulating rod held by the latter, and acts in a deforming manner on the other internal groove strips.

2. Method according to Claim 1, characterised in that the deforming of the groove strips is carries out simultaneously and synchronously.

3. Method according to Claim 1 or 2, characterised in that the deforming tool (17) guided through the hollow space (12) is supported by means of rollers (19) on the middle region of the insulating rod (4), against which region corresponding supporting rollers (18) of the deforming tool acting against the outer groove strips are pressed.

4. Arrangement for carrying out the method according to Claim 1 or one of the following claims, consisting of a clamping device holding the two metal profile sections apart an of a deforming tool (17) that can be guided through the hollow space (12) formed by the two insulating rods (4, 5) and the two metal profile sections, characterised in that a deforming tool (16) is movably guided on a supporting beam (31) extending along the clamped metal profile sections (2, 3) and is driven synchronously with the deforming tool (17) guided through the hollow space (12), wherein the tool carrier (16) has deforming rollers (21) mounted spaced apart and on inclined shafts on both longitudinal sides for the deforming of the outer groove strips (10).

5. Arrangement according to Claim 4, characterised in that the tool carrier (16) has at least two, in particular three cylindrically shaped supporting rollers (19) acting against the middle region of the insulating rod (4), and that the tool carrier (17) guided through the hollow space (12) has counteracting supporting rollers (18) arranged spaced apart at the same distance, and whose supporting forces acting on the web of the insulating rod (4) counter-balance one another.

6. Arrangement according to Claim 4 or 5, characterised on that the tool carrier (16) consists of several mutually adjustable connected structural parts.

## Revendications

1. Procédé de fabrication d'un profilé composite à isolation thermique pour fenêtres, portes ou similaires, constitué de deux profilés métalliques (2, 3) disposés à distance l'un de l'autre et reliés l'un à l'autre par deux barres isolantes (4, 5), également à distance l'une de l'autre et pénétrant dans des gorges (7) en contre-dépouille des profilés métalliques, les rebords délimitant d'un côté les gorges (7) étant déformés, contre les rebords opposés, constitués de manière stable, par action mécanique avec encastrement de bords (6) en forme de tête de marteau des barres isolantes (4, 5), caractérisé en ce qu'il consiste à déformer les deux rebords susceptibles de se déformer en une opération en un seul stade, en guidant relativement le long du profilé composite un outil de déformation agissant sur les rebords extérieurs avec un outil de déformation (17) guidé dans la cavité (12) formée par les barres isolantes (4, 5) et par les profilés métalliques, l'outil de déformation (17) guidé dans la cavité (12) s'appuyant sur les rebords intérieurs qui ne doivent pas être déformés ou sur une barre isolante maintenue par ceux-ci et déformant les autres rebords intérieurs.

2. Procédé suivant la revendication 1, caractérisé en ce qu'il consiste à effectuer la déformation des rebords en même temps et en synchronisme.

3. Procédé suivant l'une des revendications 1 ou 2, caractérisé en ce qu'il consiste à soutenir l'outil de déformation (17) guidé dans la cavité (12) au moyen de galets (19) dans la région médiane de la barre isolante (4), des galets d'appui (18) adéquats de l'outil de déformation, qui agissent sur les rebords extérieurs étant appliqués sur cette région.

4. Dispositif pour la mise en œuvre du procédé suivant la revendication 1 ou l'une des revendications suivantes, constitué d'un dispositif de blocage maintenant les deux profilés métalliques à distance l'un de l'autre et d'un outil de déformation (17) pouvant être guidé dans la cavité (12) formés par deux barres isolantes (4, 5) et par les deux profilés métalliques, caractérisé en ce que, sur un montant (31) s'étendant le long des profilés métalliques (2, 3) bloqués, un outil de déformation (16) est guidé de manière mobile et est entraîné en synchronisme avec l'outil de déformation (17) guidé dans la cavité (12), le porte-outil (16) présentant, sur les deux côté longitudinaux, à distance les uns des autres et montés sur des axes obliques, des galets de déformation (21) destinés à déformer les rebords supérieurs (10) définissant les gorges.

5. Dispositif suivant la revendication 4, caractérisé en ce que le porte-outil (16) présente au moins deux, et de préférence trois, galets d'appui (19) de forme cylindrique, agissant sur la région médiane de la barre isolante (4), et en ce que le porte-outil (17) guidé dans la cavité (12) présente des galets d'appui (18) antagonistes, disposés à la même distance l'un de l'autre et dont les forces d'appui agissant sur le rebord de la barre isolante (4) se compensent l'une l'autre.

6. Dispositif suivant l'une des revendications 4 ou 5, caractérisé en ce que le porte-outil (16) est constitué de plusieurs éléments constitutifs reliés les uns aux autres de manière réglable.

Fig.1

Fig.2

_Fig. 3_

_Fig. 4_